(19) Europäisches Patentamt
European Patent Office
Office européen des brevets

(11) Veröffentlichungsnummer: **0 222 206**
**B1**

(12) # EUROPÄISCHE PATENTSCHRIFT

(45) Veröffentlichungstag der Patentschrift: **25.01.89**

(51) Int. Cl.⁴: **C 08 L 11/00** //
(C08L11/00, 23:20)

(21) Anmeldenummer: **86114460.8**

(22) Anmeldetag: **18.10.86**

(54) **Vulkanisierbare Polymermischungen, ihre Herstellung und Verwendung sowie daraus erhaltene Vulkanisate.**

(30) Priorität: **02.11.85 DE 3538869**

(43) Veröffentlichungstag der Anmeldung:
**20.05.87 Patentblatt 87/21**

(45) Bekanntmachung des Hinweises auf die Patenterteilung:
**25.01.89 Patentblatt 89/4**

(84) Benannte Vertragsstaaten:
**DE FR GB**

(56) Entgegenhaltungen:
**US-A-2 160 997**

**JOURNAL OF POLYMER SCIENCE, Band 18, Nr. 5, Mai 1980, Seiten 1523-1537, John Wiley & Sons, Inc., New York, US; J.P. KENNEDY et al.: "New telechelic polymers and sequential copolymers by polyfunctional initiator-transfer agents (inifers). II. Synthesis and characterization of alpha,omega-di(tert-chloro)polyisobutylenes"**

(73) Patentinhaber: **BAYER AG, Konzernverwaltung RP Patentabteilung, D-5090 Leverkusen 1 Bayerwerk (DE)**

(72) Erfinder: **Rüdiger, Musch, Dr., Altenberger Dom Strasse 169, D-5060 Bergisch- Gladbach 2 (DE)**
Erfinder: **Göbel, Wilhelm, Dr., Max Beckmannstrasse 37, D-5090 Lverkusen (DE)**
Erfinder: **Mirza, Jean, Dr., Wolfsheide 23, D-5069 Odenthal- Glöbusch (DE)**

**EP 0 222 206 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft vulkanisierbare Polymermischungen aus (a) einem Polychloropren, (b) einem chlormono-, -di- oder trisubstituierten Polyisobutylen, und gegebenenfalls weiteren Mischungsbestandteilen, deren Herstellung durch Mischen entsprechender Latices, Koagulation und Aufarbeitung oder durch Mischen der Bestandteile in fester Form, deren Verwendung zur Herstellung vulkanisierter Formkörper sowie die erhaltenen Vulkanisate.

Die Anforderungen an die Qualität von Polychloroprenkautschuken steigen laufend. Für zahlreiche Anwendungsgebiete werden Typen mit gutem Verarbeitungsverhalten gefordert. Man verlangt insbesondere, daß die Energieaufnahme bei der Mischungsherstellung niedrig ist, damit sich das Material wenig erwärmt und sicherer verarbeitbar ist. Darüber hinaus besteht der Wunsch die Quellbeständigkeit in Wasser oder wasserhaltigen Medien zu verbessern.

Bekannt ist, daß man zur Verbesserung der Verarbeitbarkeit in Polychloropren in der Hauptsache Weichmacher auf Mineralöl-Basis verwendet. Wegen der leichten Einarbeitbarkeit setzt man in erster Linie relativ niedermolekulare naphthenische Verarbeitungsöle ein. Sie besitzen jedoch eine verhältnismäßig hohe Flüchtigkeit bei der Heißluftalterung, neigen in hohen Dosierungen zum Ausschwitzen und verfärben helle Mischungen.

Der Erfindung liegt daher die Aufgabe zugrunde Produkte zu finden, bei denen die oben genannten Nachteile nicht auftreten.

Die Aufgabe wird dadurch gelöst, daß man Mischungen aus Polychloropren und chlormono-, -di- oder -trisubstituiertem Polyisobutylen herstellt.

Gegenstand der Erfindung sind daher vulkanisierbare Polymermischungen aus (a) 99 bis 45 Gew.-% Polychloropren und (b) 1 bis 55 Gew.-% chlormono-, -di- oder -trisubstituiertem Polyisobutylen, wobei sich die Prozentangaben auf die Summe aus (a) und (b) beziehen, und gegebenenfalls weiteren Mischungsbestandteilen.

Vorzugsweise enthalten die Polymermischungen 95 bis 70 Gew.-% Polychloropren und 5 bis 30 Gew.-% chlorsubstituiertes Polyisobutylen.

Unter Polychloropren werden im Sinne der Erfindung Choroprenhomo- und -copolymerisate verstanden, von denen bis zu 50 Gew.-% vorvernetzt sein können. Der Anteil an Comonomeren kann bis zu 20 Gew.-% betragen, wobei als Comonomere z. B. 1-Chlorbutadien, 2,3-Dichlorbutadien, Styrol, Isopren, Acrylnitril, Acrylester und Methacrylsäure oder Schwefel sowie im Falle von vorvernetzten Produkten Divinylbenzol oder Ethylenglykoldimethacrylat in Betracht kommen. Durch Zusatz von schwefelhaltigen organischen Kettenübertragungsmitteln wie Mercaptanen wird das Molekulargewicht des entstandenen Polymeren gesteuert oder im Falle von Chloropren-Schwefel-Copolymerisaten durch einen nachgeschalteten Peptisationsschritt.

Bevorzugte Chloroprenpolymerisate enthalten 0 bis 10 Gew.-% 2,3-Dichlorbutadien oder 0 bis 1 Gew.-% Schwefel.

Die Chloratome des Polyisobutylens sitzen am Kettenende. Diese Produkte werden durch kationische Polymerisation nach der Inifermethode erhalten (US-A-4 327 201 und J.P. Kennedy et al in J. Polym. Sci, Polymer Chem. Ed 18 1523 (1980) und in Polymer Bul. 1 575 (1979) und 4, 67 (1981)).

Bevorzugte chlorsubstituierte Polyisobutylene sind solche, die durch Polymerisation von Isobutylen mit Hilfe eines Metallhalogenids mit einem Siedepunkt unter 50°C bei Normaldruck als Katalysator und eines organischen Halogenids der allgemeinen Formel

$$R_3-(\overset{\displaystyle R_1}{\underset{\displaystyle R_2}{\overset{|}{\underset{|}{C}}}}-X)_n$$

wobei

X Halogen ist,
n eine ganze Zahl 1, 2, 3 oder 4 bedeutet,
$R_1$ und $R_2$ $C_5$- bis $C_{10}$-Cycloalkyl oder geradkettiges oder verzweigtes $C_1$ bis $C_{20}$-Alkyl und
$R_3$ $C_5$- bis $C_{10}$-Cycloalkyl, geradkettiges oder verzweigtes $C_1$- bis $C_{20}$-Alkyl, $C_5$- bis $C_{10}$-Cycloalkylen, geradkettiges oder verzweigtes $C_1$- bis $C_{20}$-Alkylen oder Aryl bedeuten,

und wobei das organische Halogenid (Inifer) 5 bis 50 C-Atome besitzt und in Konzentrationen von $10^{-1}$ bis $10^{-6}$ Mol pro Mol Monomer vorliegt, während das Metallhalogenid im 1,1- bis 100-fachen molaren Überschuß, bezogen auf Halogenatome des organischen Halogenids, zugesetzt wird, bei Temperaturen von +10 bis -130°C in einem inerten organischen Lösungsmittel hergestellt werden.

Trifunktionelle Polyisobutylene sind bevorzugt.

Soll die Polymermischung auf der Latexstufe erfolgen, so wird aus dem Polyisobutylen z. B. nach Houben-Weyl, Bd. 1/2 (1959) S. 67 und 97 ff, Thieme-Verlag Stuttgart oder F. Hölcher, Dispersionen synthetischer Hochpolymer (1969) Springer-Verlag zunächst eine wäßrige Suspension hergestellt und diese mit dem Polychloropren-Latex vermischt. Der pH der alkalischen Latexmischung wird anschließend durch verdünnte Essigsäure auf pH 5 - 7 gesenkt und das Polymere aus dieser Emulsion beispielsweise durch Gefrierkoagulation isoliert und getrocknet (Chem. Engng. Progr. 43, 391 (1974), DE-C-1 051 506). Für die Aufarbeitung eignen sich aber auch andere herkömmliche Methoden, z. B. die der deutschen Patentschrift 1 111 804.

Geeignete Polychoroprene haben eine Mooneyviskosität ML 1 + 4 (100°C) von 20 bis 160 ME, vorzugsweise 30 bis 140 ME. Die Molekulargewichte der eingesetzten Polyisobutylene werden mit Hilfe der GPC bestimmt und liegen im Bereich von 500 bis 200.000 vorzugsweise bei 1.000-30.000.

Weitere in Frage kommende Mischungsbestandteile sind z. B. Ruß, helle Füllstoffe, Gleitmittel, eventuell weitere Weichmacher, Alterungsschutzmittel, Zinkoxid, Magnesiumoxid, Vulkanisationsbeschleuniger und Schwefel.

**Beispiele**

A) Herstellung des Polychloroprens

Man löst in 120 kg Wasser 3,5 kg des Natriumsalzes der disproportionierten Abietinsäure, 0,5 kg des Natriumsalzes eines Naphthalinsulfonsäure/Formaldehyd-Kondensationsproduktes und 0,6 kg Natriumhydroxyd auf. In dieser Lösung emulgiert man 90 kg Chloropren und 0,156 kg n-Dodecylmercaptan. Der Ansatz wird mit Stickstoff gespült, auf +45°C erwärmt und die Polymerisation durch kontinuierliche Zugabe von 3 gew.%-iger wäßriger Formamidinsulfinsäure durchgeführt. Die Polymerisationstemperatur wird auf +45°C gehalten. Bei einem Monomerumsatz von 60 % wird die Reaktion durch Zugabe von 90 g Phenothiazin abgebrochen. Das restliche Monomere wird durch Wasserdampfdestillation aus dem Polymeren entfernt und der Polymerlatex nach Senken des pH-Wertes auf 7,0 auf einer Kühlwalze ausgefroren und isoliert. Die Mooney-Viskosität ML 1+4, 100°C beträgt 32 ME.

B) Herstellung des Polyisobutylens mit 2 tert.-Cl Endgruppen

Experimentelle Bedingungen

| | |
|---|---|
| Dicumylchlorid | : $1{,}8 \cdot 10^{-3}$ mol/l |
| Isobuten | : 0,07 mol/l |
| Lösungsmittel | : Methylenchlorid |
| Reaktionstemperatur | : - 80°C |
| Reaktionszeit | : 30 Minuten |
| $BCl_3$ | : 0,2 mol/l |

Die Polymerisation wurde durchgeführt, indem man Isobuten und Dicumylchlorid in Methylenchlorid löste, die Mischung auf -80°C abkühlte und $BCl_3$ zugab. Die Durchführung der Polymerisation und die Aufarbeitung der Produkte erfolgte nach Makromol. Chem. 184, 553 - 662 (1983). Das Produkt hatte ein mit GPC bestimmtes Molekulargewicht von 3400.

C) Herstellung von Polyisobutylen mit 3 tert.-Cl-Endgruppen

Man verfährt wie in Beispiel B) nur wird Dicumylchlorid durch $1{,}8 \cdot 10^{-3}$ mol/l Tricumylchlorid (1,3-5-Tris-1-chloro-1-methyl-ethyl)benzol ersetzt. Das Produkt hatte ein mit GPC bestimmtes Molekulargewicht von 3600.

Die Polymeren A - C werden anschließend mit folgenden Komponenten auf der Walze in üblicher Weise gemischt.

Rezeptur

| | |
|---|---|
| Polyisobutylen (B/C) | 0-30 Gew.-Teile |
| Polychlorpren (A) | 100 Gew.-Teile |
| inaktiver Ruß | 75 Gew.-Teile |
| Weichmacher | 0-30 Gew.-Teile |
| Stearinsäure | 0,5 Gew.-Teile |
| Phenyl-β-naphthylamin | 3,0 Gew.-Teile |
| Magnesiumoxyd | 4,0 Gew.-Teile |
| Zinkoxyd | 5,0 Gew.-Teile |
| Ethylenthioharnstoff | 0,5 Gew.-Teile |

**Beispiel 1:** Temperatur der Polymermischung

Die Komponenten werden auf einer 40°C warmen Walze 18 Minuten lang gemischt. Anschließend wird die Temperatur der Vulkanisatmischung bestimmt.

| Beispiel | 1a[1]) | 1b | 1c[1]) | 1d | 1e[1]) |
|---|---|---|---|---|---|
| Polymer (Gew.-Teile) | 100 | 100 | 100 | 100 | 100 |
| Polymer B (Gew.-Teile) | 0 | 7,5 | 0 | 15 | 0 |
| Weichmacher (Gew.-Teile) | 0 | 0 | 7,5 | 0 | 15 |
| Temperatur der fertigen Mischung (°C) | 78 | 66 | 70 | 64 | 70 |

1) Vergleichsbeispiel

**Beispiel 2:** Vulkanisationsverhalten

Die Rußmischung wird in einem Bayer-Frank-Vulkameter bei 150 und 170°C auf ihr Vulkanisationsverhalten untersucht (nach DIN 53 529):

| Beispiel | 2a | 2b | 2c[1]) |
|---|---|---|---|
| Polymer A | 100 | 100 | 100 |
| B | 30 | - | - |
| C | - | 30 | - |
| Weichmacher | - | 30 | 30 |
| 150°C | | | |
| $t_R$ ($t_{10}/t_{80}$ (min) | 16 | 17 | 23 |
| $F_{MAX}$ (N) | 42 | 43 | 38 |
| 170°C | | | |
| $t_R$ (min) | 6 | 7 | 11 |
| $F_{MAX}$ (H) | 45 | 48 | 32 |

1) Vergleichsbeispiel

Daraus läßt sich ein beachtlicher technologischer Vorteil für das erfindungsgemäße Polymergemisch ableiten, da einer tieferen Batch-Temperatur (Beispiel 1b, 1d) eine schnellere Ausvulkanisation folgt. (Beispiel 2a, b). Dies führt auch zu einer vorteilhaften höheren Vernetzungsdichte der Vulkanisate ($F_{MAX}$).

**Beispiel 3:** Heißluftalterung des Vulkanisats

Prüfung nach Iso-Vorschrift 2475 - 1975 (E).

Vulkanisationstemperatur:150°C
Heizzeit: 40 min (Ring I)
Prüfung: F, D, S 100/300 % (DIN 53 504)
H 20/70°C) (DIN 53 505), E (DIN 53 512).
F = Zugfestigkeit; D = Bruchdehnung; S = Spannungswert;
H = Shorehärte A; E = Rückprallelastizität

Man läßt die nach Beispiel 2 hergestellte Vulkanisate 10 Tage bei 100°C und mißt die Vulkanisatwerte erneut. In den folgenden Tabelle sind die Differenzen zu den Ausgangswerten in % angegeben.

| Beispiel | 3a | 3b | 3c[1]) |
|---|---|---|---|
| Vulkanisat nach Beispiel | 2a | 2b | 2c |
| F-Abfall (%) | 12 | 10 | 14 |
| D-Abfall (%) | 38 | 36 | 41 |
| S-Anstieg (%) | 63 | 66 | 118 |
| H-Anstieg (%) | 6 | 6 | 14 |

1) Vergleichsbeispiel

**Beispiel 4:** Extraktion der vulkanisierten Proben

Man zerkleinert die nach Beispiel 2 hergestellten Probekörper und extrahiert je 20 g 70 Stunden lang in einer Soxhlett-Apparatur mit Hexan. Danach trocknet man die Probekörper wieder und bestimmt den Gewichtsverlust.

| Beispiel | 4a | 4b | 4c[1]) | 4d[1]) |
|---|---|---|---|---|
| Vulkanisat aus Beispiel | 2a | 2b | 2c | 1a |
| Gewichtsverlust nach Extraktion (%) | 5,6 | 5,8 | 20,5 | 4,9 |

1) Vergleichsbeispiel

Wie die Beispiele zeigen läßt nich die erfindungsgemäße Polymermischung nicht extrahieren (Beispiel 4a, b) und entspricht einem weichmacherfreien Polychloropren (Beispiel 4d).

**Patentansprüche**

1. Vulkanisierbare Polymermischungen aus (a) 99 bis 45 Gew.-% Polychloropren und (b) 1 bis 55 Gew.-% chlormono-, -di- oder trisubstituiertem Polyisobutylen, wobei sich die Prozentangaben auf die Summe aus (a) und (b) beziehen, und gegebenenfalls weiteren Mischungsbestandteilen.

2. Vulkanisierbare Polymermischungen nach Anspruch 1 aus 95 bis 70 Gew.-% (a) und 5 bis 30 Gew.-% (b).

3. Vulkanisierbare Polymermischungen nach Anspruch 1, dadurch gekennzeichnet, daß das Polychloropren eine Mooney-Viskosität ML 1 + 4 (100°C) von 20 bis 160 ME und das Polyisobutylen ein mit GPC bestimmtes Molekulargewicht von 500 bis 200.000 aufweisen.

4. Vulkanisierbare Polymermischungen nach Anspruch 1, dadurch gekennzeichnet, daß das Polychloropren ein Chloroprenhomo- oder Copolymerisat sein kann, wovon bis zu 50 Gew.-% vorvernetzt sein können, wobei der Comonomeranteil der Copolymerisate bis zu 20 Gew.-% betragen kann.

5. Vulkanisierbare Polymermischungen nach Anspruch 4, dadurch gekennzeichnet, daß das Polychloropren 0 bis 10 Gew.-% 2,3-Dichlorbutadien oder 0 bis 1 Gew.-% Schwefel enthält.

6. Vulkanisierbare Polymermischungen nach Anspruch 1, dadurch gekennzeichnet, daß das Polyisobutylen durch Polymerisation von Isobutylen mit Hilfe eines Metallhalogenids mit einem Siedepunkt unter 50°C bei Normaldruck als Katalysator und eines organischen Halogenids der allgemeinen Formel

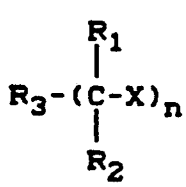

wobei
X Halogen ist,
n eine ganze Zahl 1, 2, 3 oder 4 bedeutet,
$R_1$ und $R_2$ $C_5$- bis $C_{10}$-Cycloalkyl oder geradkettiges oder verzweigtes $C_1$- bis $C_{20}$-Alkyl und
$R_3$ $C_5$- bis $C_{10}$-Cycloalkyl, geradkettiges oder verzweigtes $C_1$- bis $C_{20}$-Alkyl, $C_5$- bis $C_{10}$-Cycloalkylen,

geradkettiges oder verzweigtes $C_1$-bis $C_{20}$-Alkylen oder Aryl bedeuten,

und wobei das organische Halogenid (Inifer) 5 bis 50 C-Atome besitzt und in Konzentrationen von $10^{-1}$ bis $10^{-6}$ Mol pro Mol Monomer vorliegt, während das Metallhalogenid im 1,1- bis 100-fachen molaren Überschuß, bezogen auf Halogenatome des organischen Halogenids, zugesetzt wird, bei Temperaturen von +10 bis -130°C in einem inerten organischen Lösungsmittel herstellbar ist.

7. Vulkanisierbare Polymermischungen nach Anspruch 6, dadurch gekennzeichnet, daß n 3 ist.

8. Verfahren zur Herstellung von Polymermischungen nach Anspruch 1, dadurch gekennzeichnet, daß man die Komponenten (a) und (b) als wäßrige Dispersion, gegebenenfalls zusammen mit anderen Mischungsbestandteilen, miteinander mischt, die Mischung koaguliert und das Koagulat trocknet oder indem man die Komponenten (a) und (b) in fester Form, gegebenenfalls zusammen mit anderen Mischungsbestandteilen, mischt.

9. Verfahren zur Herstellung von Formkörpern aus den Polymermischungen nach Anspruch 1, dadurch gekennzeichnet, daß man die Polymermischungen zusammen mit einem Vernetzer und gegebenenfalls Vulkanisationsbeschleunigern, gegebenenfalls zusammen mit anderen Mischungsbestandteilen, vulkanisiert.

10. Vulkanisate hergestellt aus den Polymermischungen nach Anspruch 1.

**Claims**

1. Vulcanizable polymer mixtures of (a) from 99 to 45 % by weight of polychloroprene and (b) from 1 to 55 % by weight of chloromono-, -di- or -tri-substituted polyisobutylene, the percentages being based on the sum of (a) and (b), and optionally other components of the mixture.

2. Vulcanizable polymer mixtures according to claim 1 of from 95 to 70 % by weight of (a) and from 5 to 30 % by weight of (b).

3. Vulcanizable polymer mixtures according to claim 1, characterised in that the polychloroprene has a Mooney viscosity ML 1 + 4 (100°C) of from 20 to 160 ME and the polyisobutylene has a molecular weight determined by GPC of from 500 to 200,000.

4. Vulcanizable polymer mixtures according to claim 1, characterised in that the polychloroprene may be a chloroprene homo- or copolymer, up to 50 % by weight of which may be precross-linked, and the comonomer component of the copolymers may constitute up to 20 % by weight.

5. Vulcanizable polymer mixtures according to claim 4, characterised in that the polychloroprene contains from 0 to 10 % by weight of 2,3-dichlorobutadiene or from 0 to 1 % by weight of sulphur.

6. Vulcanizable polymer mixtures according to claim 1, characterised in that the polyisobutylene may be prepared by the polymerisation of isobutylene at temperatures from 10°C to -130°C in an inert organic solvent with the aid of a metal halide having a boiling point below 50°C at normal pressure as catalyst and an organic halide corresponding to the following general formula

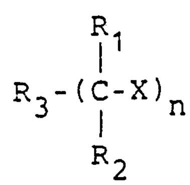

where

X denotes halogen,

n denotes the integer 1, 2, 3 or 4,

$R_1$ and $R_2$ denote $C_5$-$C_{10}$-cycloalkyl or straight chained or branched $C_1$-$C_{20}$-alkyl and

$R_3$ denotes $C_5$-$C_{10}$-cycloalkyl, straight chained or branched $C_1$-$C_{20}$-alkyl, $C_5$-$C_{10}$-cycloalkylene, straight chained or branched $C_1$-$C_{20}$-alkylene or aryl,

the organic halide (inifer) having from 5 to 50 carbon atoms and being present at concentrations from $10^{-1}$ to $10^{-6}$ mol per mol of monomer and the metal halide being added in a 1.1 to 100 times molar excess, based on the halogen atoms of the organic halide.

7. Vulcanizable polymer mixtures according to claim 6, characterised in that n is 3.

8. Process for the preparation of polymer mixtures according to claim 1, characterised in that components (a) and (b) are mixed together as aqueous dispersion, optionally together with other mixture components, the mixture is coagulated and the coagulate is dried, or components (a) and (b) are mixed together in solid form, optionally together with other mixture components.

9. Process for the production of moulded articles from the polymer mixtures according to claim 1, characterised in that the polymer mixtures are vulcanized together with a crosslinking agent and optionally vulcanization accelerators, optionally together with other mixture components.

10. Vulcanizates prepared from the polymer mixtures according to claim 1.

**Revendications**

1. Mélanges de polymères vulcanisables constitués de (a) 99 à 45 en poids de polychloroprène et (b) 1 à 55 % en poids de polyisobutylène chloromono-, -di- ou -trisubstitué, d'indications de pourcentage se rapportant à la somme de (a) et (b), et le cas échéant d'autres constituants du mélange.

2. Mélanges de polymères vulcanisables suivant la revendication 1, constitué de 95 à 70% en poids de (a) et de 5 à 30% en poids de (b).

3. Mélanges de polymères vulcanisables suivant la revendication 1, caractérisés en ce que le polychloroprène présente une viscosité Mooney ML 1 + 4 (100°C) de 20 à 160 unités Mooney et le polyisobutylène présente un poids moléculaire, déterminé par chromatographie en phase gazeuse, de 500 à 200 000.

4. Mélanges de polymères vulcanisables suivant la revendication 1, caractérisés en ce que le polychloroprène peut être un homopolymère ou un copolymère de chloroprène, dont une proportion allant jusqu'à 50 % en poids peut être prévulcanisée, la proportion de comonomère des copolymérisation pouvant s'élever jusqu'à 20 % en poids.

5. Mélanges de polymères vulcanisables suivant la revendication 4, caractérisé en ce que le polychloroprène contient 0 à 10 % en poids de 2,3-dichlorobutadiène ou 0 a 1 % en poids de soufre.

6. Mélanges de polymères vulcanisables suivant la revendication 1, caractérisés en ce que le polyisobutylène peut être préparé par polymérisation d'isobutylène à l'aide d'un halogénure métallique ayant un point d'ébullition inférieur à 50° C à la pression normale comme catalyseur et d'un halogénure organique de formule générale

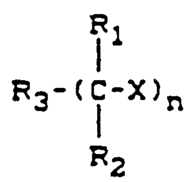

dans laquelle
X est un halogène,
n est un nombre entier égal à 1, 2, 3 ou 4,
$R_1$ et $R_2$ représentent des groupes cycloalkyle en $C_5$ à $C_{10}$ ou des groupes alkyle en $C_1$ à $C_{20}$ à chaîne droite ou à chaine ramifiée et
$R_3$ est un groupe cycloalkyle en $C_5$ à $C_{10}$, un groupe alkyle en $C_1$ à $C_{20}$ à chaîne droite ou ramifiée, un groupe cycloalkylène en $C_5$ à $C_{10}$, un groupe alkylène en $C_1$ à $C_{20}$ à chaîne droite ou ramifiée ou un groupe aryle,
et l'halogénure organique (Initer) comprend 5 à 50 atomes de carbone et est présent à des concentrations de $10^{-1}$ à $10^{-6}$ mole par mole de monomère, tandis que l'halogénure métallique est ajouté en un excès molaire de 1,1 à 100 fois, par rapport aux atomes d'halogène de l'halogénure organique, à des températures de +10 à -130° C dans un solvant organigue inerte.

7. Mélanges de polymères vulcanisables suivant la revendication 6, caractérisés en ce que n est égal à 3.

8. Procédé de préparation le mélanges de polymères suivant la revendication 1, cacacterisé en ce qu'on mélange ensemble les composants (a) et (b) sous la forme d'une dispersion aqueuse, le cas échéant conjointement avec d'autres constituants de mélange, on coagule de mélange et on sèche le coagulat ou bien, on mélange les composants (a) et (b) sous la forme solide, le cas échéant conjointement avec d'autres constituants du mélange.

9. Procédé de production de pièccs moulées à partir des mélanges de polymères suivant la revendication 1, caractérisé en ce qu'on vulcanise les mélanges de polymères conjointement avec un agent de réticulation et, le cas échéant, des accélérateurs de vulcanisation, le cas échéant en présence d'autres constituants de mélange.

10. Vulcanisats obtenus à parit des mélanges de polymères suivant la revendication 1.